# EUROPEAN PATENT SPECIFICATION

(11) **EP 3 138 768 B1**
(45) Date of publication and mention of the grant of the patent: **30.12.2020**
(21) Application number: 16193462.5
(22) Date of filing: 10.04.2013
(51) Int. Cl.: B63J 99/00, H02J 7/00

(54) **SHIP POWER-RECEIVING STRUCTURE, SHIP POWER-SUPPLYING DEVICE AND SHIP POWER-SUPPLYING METHOD**
STROMAUFNAHMESTRUKTUR EINES SCHIFFS, STROMVERSORGUNGSVORRICHTUNG EINES SCHIFFS UND STROMVERSORGUNGSVERFAHREN EINES SCHIFFS
STRUCTURE DE RECEPTION DE PUISSANCE DE NAVIRE, DISPOSITIF D'ALIMENTATION EN ENERGIE POUR NAVIRE ET PROCEDE D'ALIMENTATION EN ENERGIE POUR NAVIRE

(30) Priority: 13.04.2012 JP 2012092176
(43) Date of publication of application: 08.03.2017
(62) Document number(s) of the earlier application(s) in accordance with Art. 76 EPC: 13775110.3 / 2 838 178
(73) Proprietor: IHI Corporation, Tokyo 135-8710 (JP)
(72) Inventor: NIIZUMA, Motonao, Tokyo 135-8710 (JP)
(74) Representative: Carpmael, Robert Maurice Charles

(56) References cited:
- EP-A2- 2 421 116
- WO-A2-2011/021162
- US-A1- 2009 189 458
- US-A1- 2010 231 340
- US-A1- 2011 199 028

## Description

The present invention relates to a ship power-receiving structure, a ship power-supplying device and a ship power-supplying method. Priority is claimed on Japanese Patent Application No. 2012-92176 filed on April 13, 2012.

There are cases where electric power required for a ship is wirelessly supplied to the ship. An example of the power-supplying method is described in Japanese Unexamined Patent Application Publication (JP-A) No. 2010-11696, referred to in the following as Patent Document 1.

In the Patent Document 1, electric power is supplied in the following manner. In order to wirelessly supply electric power to a moored ship, a power-supplying coil is provided on a land-side and a power-receiving coil is provided on a ship-side. An alternating current having a high frequency (for example, 10 kHz to 30 kHz) is fed to the power-supplying coil, thereby generating electric power in the power-receiving coil. The electric power generated in the power-receiving coil is supplied to a power system provided in the ship.

In the Patent Document 1, the power-receiving coil is provided to be protruded from an outer wall of the ship. For this reason, there is a possibility that the power-receiving coil might disturb navigation.

On the other hand, it is also supposed that the power-receiving coil is pulled into the ship after receipt of electric power through the power-receiving coil is finished. In this case, a great deal of time and labor is required to pull the power-receiving coil in. US 2011/199028 A1 discloses a system which wirelessly transfers power to, e.g., a ship.

The present invention is conceived in view of the above-described circumstances and it is an object thereof to provide a ship power-receiving structure, a ship power-supplying device and a ship power-supplying method in which a power-receiving coil provided on a ship-side supplies electric power from outside of the ship to the ship through the power-receiving coil, the power-receiving coil does not disturb navigation and a great deal of time and labor required to pull the power-receiving coil in the ship can be eliminated after the supply of electric power to the ship is finished.

In order to achieve the above-described object the present invention is provided as described in claim 1 and the dependent claims.

Details of this are disclosed in the following:
In order to achieve the above-described object, there is provided a system according to claim 1.

Moreover, there is disclosed herein a power- supplying method using the above system and including a calculating step of calculating an efficiency of the electric power transmission from the power-supplying coil to the power-receiving coil by the efficiency calculating section while continuously supplying electric power from the power-supplying coil to the power-receiving coil while the ship is moored, and the calculating step is repeated a predetermined number of times while a position of the power-supplying coil is changed by the moving device, and the power-supplying coil is disposed, by the control device, in a position of the power-supplying coil where the highest of the efficiencies calculated in the calculating step is obtained.

Furthermore, there is disclosed herein a power-supplying device configured to supply electric power to a ship having the power-receiving structure and includes a power-supplying coil, provided on a land-side, configured to supply electric power to the power-receiving coil through the electromagnetic field-transmissive section, a support supporting the power-supplying coil, and a suction device attached to the support, and the suction device adheres to an outer surface of side of the ship in a state in which the power-supplying coil opposes to the power-receiving coil through the electromagnetic field-transmissive section.

### [Effects of the Invention]

There is also disclosed a power-receiving coil provided on the inside of the outer wall surface-forming section of the ship and the electromagnetic field-transmissive section formed of a material through which an electromagnetic field propagates is provided in the opposing portion to the power-receiving coil in the outer wall surface-forming section. By this configuration, the power-receiving coil is not protruded from the outer surface of side of the ship but can wirelessly receive electric power from the power-supplying coil on the land-side through the electromagnetic field-transmissive section.

Accordingly, the power-receiving coil does not disturb the navigation of the ship and is not required to be pulled into the ship after the supply of the electric power to the ship is finished.

FIG. 1 is a view showing a ship having a power-receiving structure and a power-supplying device as per the system of the present invention.
FIG. 2 is a view showing circuit configuration on a land-side and a ship-side.
FIG. 3 is a flowchart showing a first method of supplying electric power to the ship when the ship is moored.
FIG. 4 is a flowchart showing a second method of supplying electric power to the ship while the ship is moored.
FIG. 5 is a view showing a system according to a second embodiment of the present invention.
FIG. 6 is a flowchart showing a procedure to be executed before starting supply of electric power to a ship moored at a shore.
FIG. 7 is a view showing a system according to a variant example of the present invention.

Preferred embodiments of the present invention will be described with reference to the drawings. In each of the drawings, common parts have the same reference numerals and repetitive explanation will be omitted.

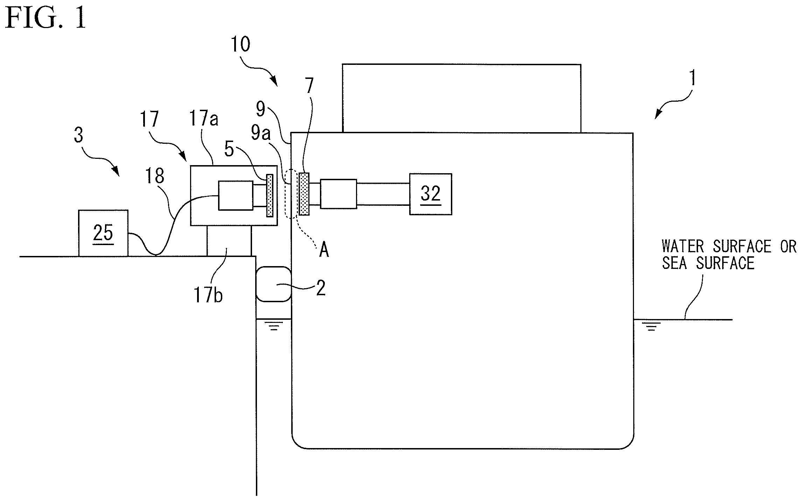

FIG. 1 shows a system having a power-supplying device 3 and a ship 1 having a power-receiving structure 10 according to the embodiments of the present invention and . FIG. 1 is a view showing the ship 1 seen in a front-rear direction.

The ship 1 can wirelessly receive electric power by the power-receiving structure 10 without using a terminal from a power-supplying coil 5 of the power-supplying device 3 provided on a land.

The power-receiving structure 10 includes a power-receiving coil 7 capable of wirelessly receiving electric power from the power-supplying coil 5 on a land-side when the ship 1 is moored at a shore and an outer wall surface-forming section 9 forming an outer surface of side of the ship 1 (that is, an outer surface of an outer plate of the ship). An electromagnetic field-transmissive section 9a is provided in an opposing portion to the power-receiving coil 7 in the outer wall surface-forming section 9. The electromagnetic field-transmissive section 9a is formed of a material through which an electromagnetic field (an electric field and a magnetic field) propagates. At the outer plate of the ship which is the outer wall surface-forming section 9, the electromagnetic field-transmissive section 9a is embedded in a through hole formed by boring a portion to which the power-receiving coil 7 is opposing. The power-receiving coil 7 is provided on an inside of the ship 1 from the outer wall surface-forming section 9.

According to the present embodiment, at least the opposing portion to the power-receiving coil 7 in the outer wall surface-forming section 9 is the electromagnetic field-transmissive section 9a formed of the material through which the electromagnetic field (the electric field and the magnetic field) propagates. Consequently, the power-receiving coil 7 can wirelessly receive electric power from the power-supplying coil 5 on the land-side through the electromagnetic field-transmissive section 9a.

The material of the electromagnetic field-transmissive section 9a is preferably fiber reinforced plastic (FRP). However, the material of the electromagnetic field-transmissive section 9a is not restricted thereto but may be plastic, for example. A fiber configured to reinforce plastic is a carbon fiber, a glass fiber, a polyethylene fiber, an aramid fiber or the like and plastic are impregnated in a fiber with an orientation of the fiber held, a plurality of fibers is superposed on each other in different fiber directions or fibers cut finely are mixed into plastic. Although an electromagnetic field passes through, the power-receiving coil 7 can be prevented from directly coming in contact with a support 41. Thus, the coil 7 or a member formed of a metal such as an electric wire can be prevented from being corroded by sea water. It is desirable that a portion between the electromagnetic field-transmissive section 9a and the outer wall surface-forming section 9 should be sealed with an elastic rubber or the like.

In the outer wall surface-forming section 9, it is possible that only a portion to which the power-receiving coil 7 is opposing in an axial direction thereof (a portion surrounded in a broken line A in FIG. 1, for example) is the electromagnetic field-transmissive section 9a. Instead, the whole outer wall surface-forming section 9 of the ship 1 may be the electromagnetic field-transmissive section 9a.

In the power-receiving structure 10 in accordance with the present embodiment, the power receiving coil 7 is not protruded from the outer surface of side of the ship 1 but can wirelessly receive electric power from the power-supplying coil 5 on the land-side through the electromagnetic field-transmissive section 9a.

Accordingly, the power-receiving coil 7 does not disturb the navigation of the ship 1. Moreover, the power-receiving coil 7 is not required to be pulled into the ship 1 after supply of electric power to the ship 1 is finished. Therefore, a time required to start and stop the receipt of the electric power can be shortened.

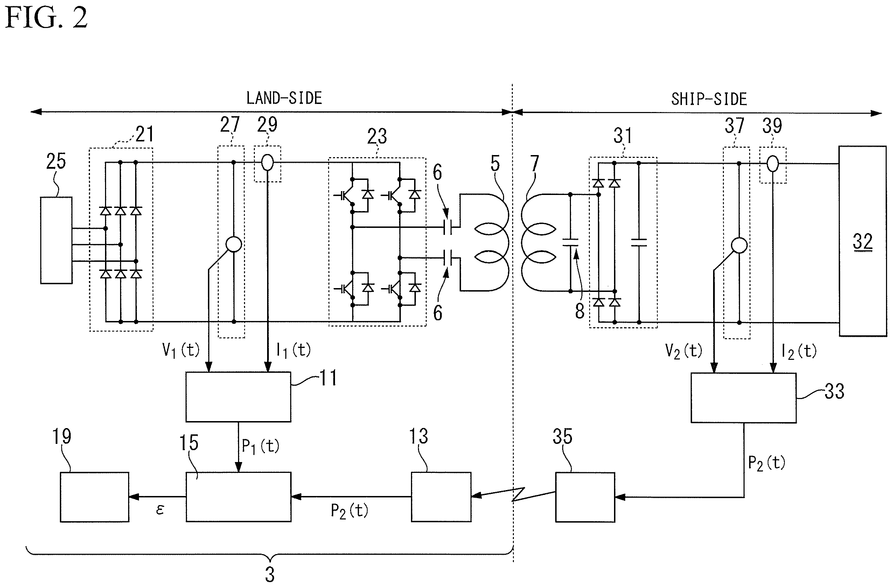

FIG. 2 shows a circuit configuration including the power-supplying device 3 and the power-receiving coil 7.

The system according to the first embodiment of the present invention includes the power-supplying device 3 that includes the power-supplying coil 5, a supply power measuring section 11, a receiving section 13, an efficiency calculating section 15, a moving device 17 and a control device 19 as is shown in FIGS. 1 and 2.

The power-supplying coil 5 is provided on the land-side. An electromagnetic coupling circuit is realized by the power-supplying coil 5 and the power-receiving coil 7 in a state in which the power-supplying coil 5 is close to the power-receiving coil 7. In this state, AC power is supplied to the power-supplying coil 5 so that the power-supplying coil 5 wirelessly transmits electric power to the power-receiving coil 7 via the electromagnetic field-transmissive section 9a. The electromagnetic coupling circuit uses an electromagnetic induction system or an electromagnetic field resonance system. In FIG. 2, two capacitors 6 are connected to the power-supplying coil 5 in series and a capacitor 8 is connected to the power-receiving coil 7 in parallel.

The supply power measuring section 11 measures electric power supplied to the power-supplying coil 5. The supply power measuring section 11 outputs a measured value P₁(t) of electric power obtained by multiplying a measured value V₁(t) of a voltage supplied to the power-supplying coil 5 and a measured value I₁(t) of a current supplied to the power-supplying coil 5. As is shown in FIG. 2, the power-supplying device 3 is provided with a rectifier circuit 21, an inverter 23 and an external power supply 25. The rectifier circuit 21 coverts AC power from the external power supply 25 into DC power. The inverter 23 converts the DC power from the rectifier circuit 21 into AC power and supplies the AC power to the power-supplying coil 5. The measured value V₁(t) of the voltage and the measured value I₁(t) of the current are obtained by measuring a DC voltage and a direct current, respectively, from the rectifier circuit 21 between the rectifier circuit 21 and the inverter 23. The measured value V₁(t) of the voltage and the measured value I₁(t) of the current are measured by a voltage measuring device 27 and a current measuring device 29 shown in FIG. 2, respectively.

The receiving section 13 receives a measured value of a power receiving amount of the power-receiving coil 7 from the ship 1 side. A measured value (a measured value of electric power) P₂(t) of the power receiving amount is obtained by multiplying a measured value V₂(t) of a voltage supplied from the power-supplying coil 5 to the power-receiving coil 7 and a measured value I₂(t) of a current supplied from the power-supplying coil 5 to the power receiving coil 7.

As is shown in FIG. 2, the ship 1 is provided with a rectifier circuit 31, a power receiving amount measuring section 33 and a transmitting section 35. The rectifier circuit 31 converts AC power from the power-receiving coil 7 into DC power and supplies the DC power to a load 32 in the ship 1. An electricity storage device may be provided in place of the load 32. The power receiving amount measuring section 33 calculates, as the measured value P₂(t) of the power receiving amount, a value obtained by multiplying a measured value V₂(t) of a DC voltage from the rectifier circuit 31 and a measured value I₂(t) of a direct current from the rectifier circuit 31. The measured value V₂(t) of the voltage and the measured value I₂(t) of the current are measured by a voltage measuring device 37 and a current measuring device 39 shown in FIG. 2, respectively. The transmitting section 35 wirelessly transmits the measured value P₂(t) of the electric power calculated by the power receiving amount measuring section 33 to the receiving section 13.

The efficiency calculating section 15 measures an efficiency of electric power transmission from the power-supplying coil 5 to the power-receiving coil 7 based on the measured value P₁(t) of the electric power measured by the supply power measuring section 11 and the measured value P₂(t) of the electric power received from the transmitting section 35 on the ship 1 side. The efficiency ε is calculated in accordance with the following equation. [Equation 1] $ε = {P}_{2} \left(t\right) / {P}_{1} \left(t\right)$

The moving device 17 is provided on the land-side and moves the power-supplying coil 5 with respect to the land, thereby changing a position of the power-supplying coil 5. The moving device 17 is configured to move the power-supplying coil 5 in a horizontal direction along the outer surface of side of the ship 1 and in a vertical direction, thereby enabling adjustment of the position of the power-supplying coil 5. In other words, the moving device 17 includes a mobile body 17a having the power-supplying coil 5 attached thereto, a moving mechanism 17b configured to move the mobile body 17a in the horizontal direction and in the vertical direction, and a motive power supply (not shown) configured to give motive power configured to move the mobile body 17a to the moving mechanism 17b. The moving device 17 may be configured to move the power-supplying coil 5 in the horizontal direction along the outer surface of side of the ship 1 and in the vertical direction, and furthermore, to move the power-supplying coil 5 in an direction perpendicular to the outer surface of side of the ship 1.

Electric power is supplied by a cable 18 from the external power supply 25 that is stationary with respect to the land to the power-supplying coil 5 attached to the mobile body 17a that is moved with respect to the land. The cable 18 may be deformably flexed or may be freely wound off from a drum in order to follow a change in a position of the mobile body 17a of the moving device 17. The rectifier circuit 21 and the inverter 23 may be provided in the mobile body 17a or may be provided on the external power supply 25 side so as to be stationary with respect to the land.

The control device 19 controls the moving device 17 to move the power-supplying coil 5. In particular, the control device 19 controls the moving device 17 to move the power-supplying coil 5 based on an efficiency ε calculated ty the efficiency calculating section 15, thereby adjusting the position of the power-supplying coil 5 with respect to the power-receiving coil 7. In other words, the control device 19 performs control of Step S6 which will be described below.

Next, description will be given of a power-supplying method using the power-supplying device 3 of the first embodiment of the present invention.

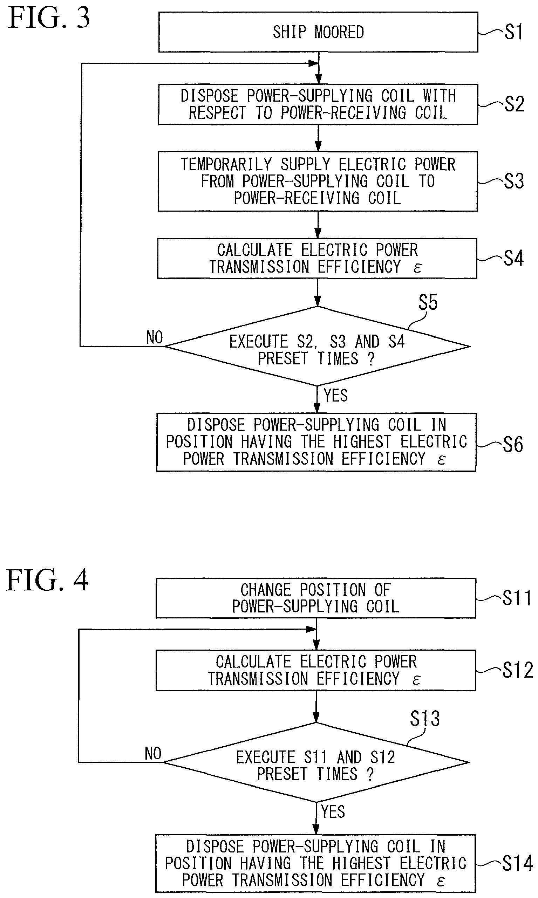

FIG. 3 is a flowchart showing a first method of supplying electric power to the ship 1 when the ship 1 is moored.

In Step S1, the ship 1 ends navigation and is moored at a predetermined shore. As is shown in FIG. 1, at this time, the ship 1 collides with a cushioning material 2 provided on a quay and can be thus prevented from directly colliding with the quay.

In Step S2, the power-supplying coil 5 is disposed with respect to the power-receiving coil 7 of the moored ship 1. In other words, the moving mechanism 17b is disposed or operated to place the power-supplying coil 5 attached to the mobile body 17a of the moving device 17 in the power-supplying device 3 in an opposing position to the power-receiving coil 7 of the ship 1 moored in the Step S1.

It is possible to end the disposition in the Step S2 through the Step S1 by mooring the ship 1 so that the power-receiving coil 7 of the ship 1 opposes to the power-supplying coil 5 provided on the land-side in the Step S1.

In Step S3, electric power is temporarily supplied from the power-supplying coil 5 to the power-receiving coil 7. At this time, the electric power supplied to the power-supplying coil 5 (that is, the measured value P₁(t) of the electric power) is measured by the supply power measuring section 11 and the electric power supplied to the power-receiving coil 7 (that is, the measured value P₂(t) of the electric power) is measured by the power receiving amount measuring section 33.

In the Step S3, in consideration of the fact that the ship 1 rolls and pitches by a wave on a water surface or on a sea surface, the electric power supplied to the power-supplying coil 5 may be measured a plurality of times at different time points so that an average value of the measured values thus obtained may be set to be the measured value P₁(t) of the electric power to be used in next Step S4. In the Step S3, similarly, the electric power supplied to the power-receiving coil 7 may be measured a plurality of times at different time points so that the average value of the measured values thus obtained may be set to be the measured value P₂(t) of the electric power to be used in the next Step S4.

In the Step S4, referring to the supply of the electric power from the power-supplying coil 5 to the power-receiving coil 7 that is executed in the Step S3, the efficiency ε of the electric power transmission is calculated by the efficiency calculating section 15. In other words, the efficiency ε of the electric power transmission is calculated by the efficiency calculating section 15 based on the measured value P₁(t) of the electric power and the measured value P₂(t) of the electric power which are measured in the Step S3.

In Step S5, it is judged whether the Steps S2, S3 and S4 have been executed a preset plurality of times (preferably 3 times or more) or not. Between these plurality of executions, the position of the power-supplying coil 5 disposed in the Step S2 with respect to the power-receiving coil 7 is varied (for example, approximately by 10 cm or by 20 cm). These positions may be different from each other in a horizontal direction or in a vertical direction or may be scattered in a grid pattern at an interval in the horizontal direction and in the vertical direction. If the judgment in the Step S5 is Yes (that is, the Steps S2, S3 and S4 have been executed a preset plurality of times), the processing proceeds to Step S6. If the judgment in the Step S5 is No (that is, the Steps S2, S3 and S4 have been executed a smaller number of times than the preset plurality of times), the processing returns to the Step S2. If the ship 1 floats on the sea surface, a position of the ship 1 with respect to the land is not greatly changed by rise and fall of tides in approximately a few minutes or less. Accordingly, the position of the power-supplying coil 5 with respect to the land may be used in place of the position of the power-supplying coil 5 with respect to the power-receiving coil 7.

In the Step S6, the moving device 7 is controlled by the control device 19 to dispose the power-supplying coil 5 in a position where the highest of the calculated efficiencies ε is obtained during a plurality of executions of the Step S4. In this state, the electric power is continuously supplied from the power-supplying coil 5 to the power-receiving coil 7.

By the power-supplying method, it is possible to perform the electric power transmission from the power-supplying coil 5 to the power-receiving coil 7 continuously efficiently. Moreover, a precise mark indicative of the position of the power-receiving coil 7 does not need to be provided on the outer surface of side of the ship 1 in order to position the power-supplying coil 5 with respect to the power-receiving coil 7.

Referring to the power-supplying method, the electromagnetic coupling circuit preferably uses an electromagnetic field resonance system. In this case, even if the position of the power-supplying coil 5 with respect to the power-receiving coil 7 is shifted, the efficiency of the electric power transmission from the power-supplying coil 5 to the power-receiving coil 7 is not much reduced. Even if the position of the power-supplying coil 5 with respect to the power-receiving coil 7 is changed due to the rocking motion of the ship 1 that is caused by the wave on the sea surface, consequently, it is possible to prevent the electric power transmission efficiency from being reduced. Thus, it is possible to decrease an efficiency fluctuation amount caused by the rocking motion of the wave.

FIG. 4 is a flowchart showing a second method of supplying electric power to the ship 1 while the ship 1 is moored. Referring to the power-supplying method, the electric power is continuously supplied from the power-supplying coil 5 to the power-receiving coil 7 while the ship 1 is moored, and at the same time, Steps S11, S12, S13 and S14, which will be described below, are repeated at a time interval. This power-supplying method is performed after the Step S6 explained above, for example.

In the Step S11, the position of the power-supplying coil 5 is changed by the control device 19. In other words, the moving device 17 slightly (for example, approximately by 10 cm) moves the power-supplying coil 5 from the position of the power-supplying coil 5 at the present time to another position.

In the Step S12, the efficiency ε of the electric power transmission from the power-supplying coil 5 to the power-receiving coil 7 is calculated by the efficiency calculating section 15 in a state in which the position of the power-supplying coil 5 is changed in the Step S11. The calculation is carried out by the same method as that in the Step S4.

In the Step S13, it is judged whether the number of execution times of the Steps S11 and S12 reaches a preset plurality of times (preferably three times or more) or not. If the judgment is Yes (that is, the Steps S11 and S12 have been executed a preset plurality of times), the processing proceeds to Step S14. If the judgment is No (that is, the number of the execution times of the Steps S11 and S12 is smaller than the preset plurality of times), the processing returns to the Step S11. As an example, it is preferable that a preset number of times should be four and the position of the power-supplying coil 5 should be changed once for each of upward, downward, leftward and rightward directions from the position at the present time in the Step S11.

In the Step S14, then, the power-supplying coil 5 is disposed, by the control device 19, in the position of the power-supplying coil 5 where the highest of the calculated efficiencies ε is obtained during a plurality of executions of the Step S12.

The Steps S11, S12, S13 and S14 are executed at a time interval (for example, an interval of one to five minutes). Even if the position of the power-supplying coil 5 with respect to the power-receiving coil 7 is changed to a position where the electric power transmission efficiency is reduced due to the rise and fall of tides or a change in a draft of the ship, accordingly, the position of the power-supplying coil 5 is modified to a position where the electric power transmission efficiency is increased.

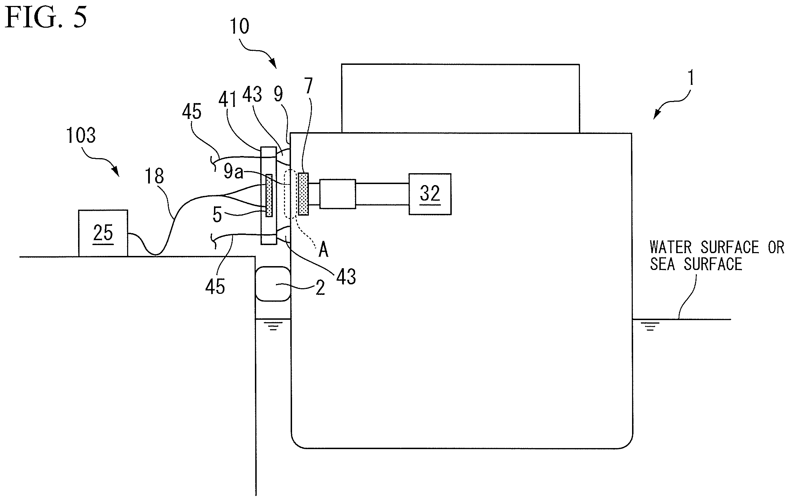

FIG. 5 shows a configuration of a power-supplying device. The power-supplying device 103 supplies electric power to the ship 1 having the power-receiving structure 10. FIG. 5 is a view showing the ship 1 seen in a front-rear direction. The power-supplying device 103 is different from the power-supplying device 3 according to the first embodiment in that the supply power measuring section 11, the receiving section 13, the efficiency calculating section 15, the moving device 17 and the control device 19 are not provided but a support 41 configured to support the power-supplying coil 5 and a suction device 43 attached to the support 41 are provided instead.

In FIG. 5, the power-supplying device 103 includes the support 41 configured to support the power-supplying coil 5 and the suction device 43 attached to the support 41. The power-supplying coil 5 can adhere to the outer surface of side of the ship 1 in a state in which the power-supplying coil 5 is opposing to the power-receiving coil 7 through the electromagnetic field-transmissive section 9a.

The suction device 43 is preferably a vacuum cup attached to the support 41. The vacuum cup can adhere to the outer surface of side of the ship by sucking internal air through a sucking source (not shown) via a deformable tube 45. The sucking source is a vacuum pump, for example.

An installation area of the suction device 43 is predetermined to be a predetermined area in which the power-supplying coil 5 and the power-receiving coil 7 oppose to each other through the electromagnetic field-transmissive section 9a with the suction device 43 adhering to the outer surface of side of the ship. For example, within the installation area of the suction device 43 the surface of the outer surface of side of the ship is made smooth so that the suction device 43 (the vacuum cup) can easily adheres and outside of the installation area the surface is made rough so that the suction device 43 is difficult to adhere.

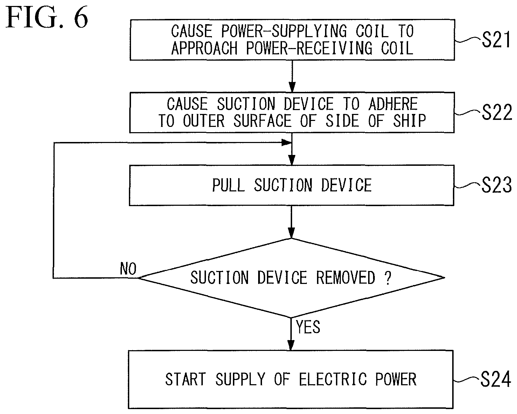

Within the installation area, the adhesion of the suction device 43 is carried out following a procedure of FIG. 6 in the following manner.

FIG. 6 is a flowchart showing a procedure for starting supply of electric power to the ship 1 moored at a shore.

In Step S21, the position of the power-receiving coil 7 in the ship 1 is roughly known in advance. When the ship 1 is moored at the shore, therefore, the power-supplying coil 5 is caused to approach the position of the power-receiving coil 7.

In Step S22, next, the suction device 43 is caused to adhere to the outer surface of side of the ship.

In Step S23, the support 41 (that is, the suction device 43) is pulled away from the outer surface of side of the ship in this state.

If the suction device 43 is removed from the outer surface of side of the ship, consequently, the position of the support 41 is shifted, and again, the suction device 43 is caused to adhere to the outer surface of side of the ship in another position in the Step S22 and the support 41 is pulled away from the outer surface of side of the ship in this state in the Step S23.

The operations of the Steps S22 and S23 are repeated until the suction device 43 is not removed from the outer surface of side of the ship even if the support 41 is pulled away from the outer surface of side of the ship.

When the suction device 43 is not removed from the outer surface of side of the ship even if the support 41 is pulled away from the outer surface of side of the ship in the Step S23, it is judged that the suction device 43 adheres to the outer surface of side of the ship within the installation area. Therefore, the processing proceeds to Step S24.

In the Step S24, supply of electric power from the power-supplying coil 5 to the power-receiving coil 7 is started in the state in which the suction device 43 adheres to the outer surface of side of the ship. Then, the position of the suction device 43 with respect to the shore is varied by the rise and fall of tides or a change in a draft of the ship. The tube 45 is deformably flexed to follow the change in the position.

In the power-supplying device 103, if the suction device 43 is not removed from the outer surface of side of the ship through the Step S23, the power-supplying coil 5 subsequently moves integrally with the ship 1 and the power-receiving coil 7 by the wave on the water surface or the sea surface, for example. Accordingly, the supply of electric power can be performed stably.

Moreover, it is possible to search for the position of the power-receiving coil 7 (that is, the installation area) based on the judgment whether the suction device 43 is not removed from the outer surface of side of the ship in the Step S23. For this reason, a precise mark indicative of the position of the power-receiving coil 7 is not required.

In the power-supplying device 103, in the case in which the electromagnetic coupling circuit realized by the power-supplying coil 5 and the power-receiving coil 7 uses an electromagnetic field resonance system, the efficiency of electric power transmission from the power-supplying coil 5 to the power-receiving coil 7 is not much reduced even if the position of the power-supplying coil 5 with respect to the power-receiving coil 7 is shifted. Even if the power-supplying coil 5 is roughly positioned with respect to the power-receiving coil 7, it is possible to prevent the electric power transmission efficiency from being reduced.

The power-supplying device 103 is not provided with the supply power measuring section 11, the receiving section 13, the efficiency calculating section 15, the moving device 17 or the control device 19. The other configurations of the power-supplying device 103 are the same as those of the power-supplying device 3 according to the first embodiment.

Although a rectifier circuit 21 and an inverter 23 may be provided on the support 41 in the power-supplying device 103, they are preferably provided on the side of the external power supply 25 so as to be stationary with respect to the land in the supply of electric power from the power-supplying coil 5 to the power-receiving coil 7.

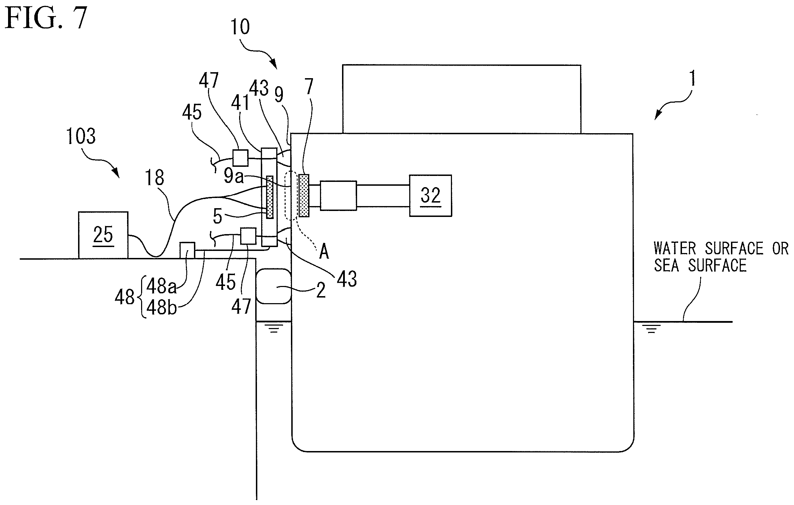

In the power-supplying device 103, moreover, an exhaust valve 47 may be provided in the middle of the tube 45 and a rope switch 48 may be provided between the support 41 and a quay as is shown in FIG. 7.

The exhaust valve 47 turns ON/OFF an exhaust in accordance with an electrical command given from the rope switch 48. In a normal state, the exhaust valve 47 is set so as not to carry out the exhaust.

The rope switch 48 includes a switch 48a and a rope 48b. The switch 48a is turned ON/OFF depending on whether the rope 48b is stretched or slackened. Consequently, it is possible to electrically detect whether the rope 48b is stretched or slackened. A length of the rope 48b is set in such a manner that the rope 48b is slackened during normal power supply and the cable 18 and the tube 45 are not stretched (that is, they are slackened) even when the rope 48b is stretched.

In some cases, the ship 1 leaves the quay with the support 41 adhered to due to an unintended motion of the ship 1, a bad weather or the like. In these cases, the rope 48b of the rope switch 48 is stretched so that the switch 48a is flipped. Consequently, an electrical command is given from the rope switch 48 to the exhaust valve 47 ordering to perform the exhaust. When the exhaust is performed through the exhaust valve 47, the vacuum state of the tube 45 is released. Thus, the adhesion of the suction device 43 attached to the support 41 to the outer surface of side of the ship 1 is terminated and the support 41 leaves the ship 1. Therefore, it is possible to prevent the cable 18 or the tube 45 from being broken. It is more preferable to stop an operation of the sucking source (the vacuum pump) simultaneously with the exhaust from the exhaust valve 47.

Various shapes, combinations or the like of the components shown in the embodiments are only illustrative. The present invention is not restricted to the above description but is restricted to only the appended claims.

For example, the power-supplying device 3 according to the first embodiment or the power-supplying device 103 may be provided with a billing device (not shown). In this case, when money is put in the billing device, electric power is supplied from the power-supplying coil 5 to the power-receiving coil 7 for a period of time corresponding to the amount of money. When the period of time passes, supply of electric power from the external power supply 25 to the power-supplying coil 5 is stopped, the mobile body 17a is moved in such a manner that the power-supplying coil 5 goes away from the power-receiving coil 7 in the first embodiment or the suction device 43 stops the adhesion to the outer surface of side of the ship and is thus removed from the outer surface of side of the ship in the second embodiment, for example. If the exhaust valve 47 is provided in the middle of the tube 45, it is also possible to give an electrical command to the exhaust valve 47 in order to perform the exhaust, thereby removing the suction device 43 from the outer surface of side of the ship.

### [Industrial Applicability]

According to the system or method of the present invention, the power-receiving coil is provided on the inside of the outer wall surface-forming section of the ship and the electromagnetic field-transmissive section formed of a material through which an electromagnetic field propagates is provided in the opposing portion to the power-receiving coil in the outer wall surface-forming section. By this configuration, the power-receiving coil is not protruded from the outer surface of side of the ship but can wirelessly receive electric power from the power-supplying coil on the land-side through the electromagnetic field-transmissive section.

Accordingly, the power-receiving coil does not disturb the navigation of the ship and is not required to be pulled into the ship after the supply of the electric power to the ship is finished.

### [Description of Reference Signs]

- 1: ship
- 2: cushioning material
- 3, 103: power-supplying device
- 5: power-supplying coil
- 6: capacitor
- 7: power-receiving coil
- 8: capacitor
- 9: outer wall surface-forming section
- 9a: electromagnetic field-transmissive section
- 10: power-receiving structure
- 11: supply power measuring section
- 13: receiving section
- 15: efficiency calculating section
- 17: moving device
- 17a: mobile body
- 17b: moving mechanism
- 18: cable
- 19: control device
- 21: rectifier circuit
- 23: inverter
- 25: external power supply
- 27: voltage measuring device
- 29: current measuring device
- 31: rectifier circuit
- 32: load
- 33: power receiving amount measuring section
- 35: transmitting section
- 37: voltage measuring device
- 39: current measuring device
- 41: support
- 43: suction device
- 45: tube
- 47: exhaust valve
- 48: rope switch

## Claims

1. A system comprising a power-supplying device and a ship, said power-supplying device configured to supply electric charging power to said ship, and the ship having a power-receiving structure,
the power-receiving structure, comprising:
a power-receiving coil capable of wirelessly receiving electric charging power from a power-supplying coil on a land-side; and
an outer wall surface-forming section forming an outer surface of side of the ship,
wherein the power-receiving coil is provided on an inside of the ship from the outer wall surface-forming section, and
an electromagnetic field-transmissive section formed of a material through which an electromagnetic field propagates is provided in an opposing portion to the power-receiving coil in the outer wall surface-forming section,
the power-supplying device comprising:
a power-supplying coil, provided on a land-side, configured to supply electric charging power to the power-receiving coil through the electromagnetic field-transmissive section;
a supply power measuring section configured to measure electric charging power supplied to the power-supplying coil a plurality of times;
a receiving section configured to receive, from a ship-side, a plurality of measured value of electric charging power received from the power-supplying coil by the power-receiving coil;
an efficiency calculating section configured to calculate an efficiency of electric charging power transmission from the power-supplying coil to the power-receiving coil based on an average value of the supplied electric charging power measured a plurality of times by the supply power measuring section and an average value of the plurality of measured values of the electric charging power received by the receiving section;
a moving device, provided on the land-side, configured to move the power-supplying coil; and
a control device configured to control the moving device to move the power-supplying coil with respect to the power-receiving coil to calculate an efficiency of electric charging power transmission at a plurality of positions to establish the position with the most efficient electric charging power transmission and,
based on the efficiency calculated by the efficiency calculating section adjust a position of the power-supplying coil with respect to the power-receiving coil to a position having the highest electric charging power transmission efficiency.

2. The system according to claim 1, wherein the material of the electromagnetic field-transmissive section is plastic.

3. The system according to claim 2, wherein the plastic is fiber reinforced plastic.

4. A power supplying method using the system according to claim 1, the method comprising:
a first step of disposing the power-supplying coil with respect to the power-receiving coil when the ship is moored;
a second step of temporarily supplying electric charging power from the power-supplying coil to the power-receiving coil through the electromagnetic field-transmissive section; and
a third step of calculating an efficiency of the electric charging power transmission from the power-supplying coil to the power-receiving coil in the second step by the efficiency calculating section,
wherein the first to third steps are repeated a predetermined number of times while a position of the power-supplying coil with respect to the power-receiving coil is changed, and
the power-supplying coil is disposed, by the control device, in a position of the power-supplying coil where the highest of the efficiencies calculated in the third step is obtained and electric charging power is continuously supplied from the power-supplying coil to the power-receiving coil in this state.

## Patentansprüche

1. System, umfassend eine Stromversorgungsvorrichtung und ein Schiff, wobei die Stromversorgungsvorrichtung konfiguriert ist, um elektrischen Ladestrom an das Schiff zuzuführen, und wobei das Schiff eine Stromaufnahmestruktur aufweist,
wobei die Stromaufnahmestruktur Folgendes umfasst:
eine Stromaufnahmespule, welche in der Lage ist, drahtlos von einer Stromversorgungsspule auf einer Landseite einen elektrischen Ladestrom zu empfangen; und
einen äußeren wandflächenformenden Abschnitt, welcher eine Außenfläche der Seite des Schiffs bildet,
wobei die Stromaufnahmespule auf einer Innenseite des Schiffs von dem äußeren wandflächenformenden Abschnitt bereitgestellt ist, und
einen elektromagnetischen Feldübertragungsabschnitt, welcher aus einem Material gebildet ist, durch welches ein elektromagnetisches Feld sich ausbreitet, und welcher in einem der Stromaufnahmespule gegenüberliegenden Abschnitt in dem äußeren wandflächenformenden Abschnitt bereitgestellt ist,
wobei die Stromversorgungsvorrichtung Folgendes umfasst:
eine Stromversorgungsspule, welche auf einer Landseite bereitgestellt ist und konfiguriert ist, um einen elektrischen Ladestrom an die Stromaufnahmespule durch den elektromagnetischen Feldübertragungsabschnitt zuzuführen;
einen Versorgungsstrommessabschnitt, welcher konfiguriert ist, um den elektrischen Ladestrom zu messen, welcher an die Stromversorgungsspule mehrmals zugeführt wird;
einen Aufnahmeabschnitt, welcher konfiguriert ist, um, von einer Schiffsseite, eine Mehrzahl von gemessenen Werten des elektrischen Ladestroms aufzunehmen, welcher von der Stromversorgungsspule durch die Stromaufnahmespule aufgenommen wird;
einen Wirkungsgradberechnungsabschnitt, welcher konfiguriert ist, um einen Wirkungsgrad der elektrischen Ladestromübertragung von der Stromversorgungsspule an die Stromaufnahmespule, basierend auf einem Durchschnittswert des zugeführten elektrischen Ladestroms, welcher mehrmals durch den Versorgungsstrommessabschnitt gemessen wird, und einen Durchschnittswert der Mehrzahl von gemessenen Werten des elektrischen Ladestroms zu berechnen, welcher durch den Aufnahmeabschnitt aufgenommen wird;
eine Bewegungsvorrichtung, welche auf der Landseite bereitgestellt ist, und welche konfiguriert ist, um die Stromversorgungsspule zu bewegen; und
eine Steuervorrichtung, welche konfiguriert ist, um die Bewegungsvorrichtung zu steuern, um die Stromversorgungsspule relativ zu der Stromaufnahmespule zu bewegen, um einen Wirkungsgrad der elektrischen Ladestromübertragung an einer Mehrzahl von Stellen zu berechnen, um die Position mit der effizientesten elektrischen Ladestromübertragung festzustellen und,
basierend auf dem Wirkungsgrad, welcher durch den Wirkungsgradberechnungsabschnitt berechnet wird, Einstellen einer Position der Stromversorgungsspule relativ zu der Stromaufnahmespule, an einer Stelle, welche den höchsten elektrischen Ladeübertragungswirkungsgrad aufweist.

2. System nach Anspruch 1, wobei das Material des elektromagnetischen Feldübertragungsabschnitts Kunststoff ist.

3. System nach Anspruch 2, wobei der Kunststoff ein faserverstärkter Kunststoff ist.

4. Stromversorgungsverfahren, welches das System nach Anspruch 1 verwendet, wobei das Verfahren umfasst:
einen ersten Schritt des Anordnens der Stromversorgungsspule relativ zu der Stromaufnahmespule, wenn das Schiff am Kai liegt;
einen zweiten Schritt des zeitweiligen Versorgens eines elektrischen Ladestroms von der Stromversorgungspule an die Stromaufnahmespule durch den elektromagnetischen Feldübertragungsabschnitt; und
einen dritten Schritt des Berechnens eines Wirkungsgrads der elektrischen Ladestromübertragung von der Stromversorgungsspule an die Stromaufnahmespule in dem zweiten Schritt durch den Wirkungsgradberechnungsabschnitt,
wobei der erste bis zum dritten Schritt eine vorbestimmte Anzahl von Malen wiederholt werden, während eine Position der Stromversorgungsspule relativ zu der Stromaufnahmespule verändert wird, und
die Stromversorgungsspule durch die Steuervorrichtung in eine Position der Stromversorgungsspule angeordnet wird, wo der höchste Wirkungsgrad unter den in dem dritten Schritt berechneten Wirkungsgraden erhalten wird, und ein elektrischer Ladestrom von der Stromversorgungsspule an die Stromaufnahmespule in diesem Zustand zugeführt wird.

## Revendications

1. Système comprenant un dispositif d'alimentation en énergie et un navire, ledit dispositif d'alimentation en énergie étant configuré pour alimenter de l'énergie de charge électrique sur ledit navire, et le navire comportant une structure de réception d'énergie,
la structure de réception d'énergie comprenant :
une bobine de réception d'énergie qui dispose de la capacité de recevoir sans fil l'énergie de charge électrique en provenance d'une bobine d'alimentation en énergie sur un côté de terre ; et
une section de formation de surface de paroi externe qui forme une surface externe du côté de navire ;
dans lequel la bobine de réception d'énergie est prévue sur un intérieur du navire par rapport à la section de formation de surface de paroi externe ; et
une section de transmission de champ électromagnétique qui est formée en un matériau au travers duquel un champ électromagnétique est propagé est prévue dans une partie opposée par rapport à la bobine de réception d'énergie dans la section de formation de surface de paroi externe ;
le dispositif d'alimentation en énergie comprenant :
une bobine d'alimentation en énergie qui est prévue sur un côté de terre et qui est configurée pour alimenter de l'énergie de charge électrique sur la bobine de réception d'énergie au travers de la section de transmission de champ électromagnétique ;
une section de mesure d'énergie d'alimentation qui est configurée pour mesurer l'énergie de charge électrique qui est alimentée sur la bobine d'alimentation en énergie une pluralité de fois;
une section de réception qui est configurée pour recevoir, depuis un côté de navire, une pluralité de valeurs mesurées de l'énergie de charge électrique qui est reçue depuis la bobine d'alimentation en énergie par la bobine de réception d'énergie ;
une section de calcul d'efficience qui est configurée pour calculer une efficience de la transmission d'énergie de charge électrique depuis la bobine d'alimentation en énergie jusqu'à la bobine de réception d'énergie sur la base d'une valeur moyenne de l'énergie de charge électrique alimentée qui est mesurée une pluralité de fois par la section de mesure d'énergie d'alimentation et d'une valeur moyenne de la pluralité de valeurs mesurées de l'énergie de charge électrique qui est reçue par la section de réception ;
un dispositif mobile qui est prévu sur le côté de terre et qui est configuré pour déplacer la bobine d'alimentation en énergie ; et
un dispositif de commande qui est configuré pour commander le dispositif mobile pour déplacer la bobine d'alimentation en énergie par rapport à la bobine de réception d'énergie afin de calculer une efficience de transmission de l'énergie de charge électrique au niveau d'une pluralité de positions dans le but d'établir la position qui présente la transmission d'énergie de charge électrique la plus efficiente ; et
sur la base de l'efficience qui est calculée par la section de calcul d'efficience, le réglage d'une position de la bobine d'alimentation en énergie par rapport à la bobine de réception d'énergie au niveau d'une position qui présente l'efficience de transmission d'énergie de charge électrique la plus élevée.

2. Système selon la revendication 1, dans lequel le matériau de la section de transmission de champ électromagnétique est une matière plastique.

3. Système selon la revendication 2, dans lequel la matière plastique est une matière plastique renforcée par fibres.

4. Procédé d'alimentation en énergie utilisant le système selon la revendication 1, le procédé comprenant :
une première étape de disposition de la bobine d'alimentation en énergie par rapport à la bobine de réception d'énergie lorsque le navire est amarré ;
une deuxième étape d'alimentation temporaire en énergie de charge électrique depuis la bobine d'alimentation en énergie jusqu'à la bobine de réception d'énergie au travers de la section de transmission de champ électromagnétique ; et
une troisième étape de calcul d'une efficience de la transmission d'énergie de charge électrique depuis la bobine d'alimentation en énergie jusqu'à la bobine de réception d'énergie qui est réalisée au niveau de la deuxième étape par la section de calcul d'efficience ;
dans lequel les première à troisième étapes sont répétées un nombre prédéterminé de fois tandis qu'une position de la bobine d'alimentation en énergie par rapport à la bobine de réception d'énergie est modifiée ; et
la bobine d'alimentation en énergie est disposée, par le dispositif de commande, au niveau d'une position de la bobine d'alimentation en énergie au niveau de laquelle la plus élevée des efficiences qui sont calculées au niveau de la troisième étape est obtenue et l'énergie de charge électrique est alimentée en continu depuis la bobine d'alimentation en énergie jusqu'à la bobine de réception d'énergie dans cet état.
